## Europäisches Patentamt
## European Patent Office
## Office européen des brevets

(11) Publication number: **0 078 639**
**B1**

(12) **EUROPEAN PATENT SPECIFICATION**

(45) Date of publication of patent specification: **05.02.86**

(51) Int. Cl.⁴: **B 62 K 25/00, B 62 D 61/08**

(21) Application number: **82305627.0**

(22) Date of filing: **22.10.82**

(54) **Light vehicle front suspensions.**

(30) Priority: **29.10.81 JP 174340/81**

(43) Date of publication of application:
**11.05.83 Bulletin 83/19**

(45) Publication of the grant of the patent:
**05.02.86 Bulletin 86/06**

(84) Designated Contracting States:
**DE FR GB IT**

(56) References cited:
**FR-A- 985 372**
**GB-A- 990 223**
**GB-A-2 015 949**
**US-A- 415 952**
**US-A-2 818 127**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Satoh, Kazuo**
**3-23-3, Higashi-Mizuhodai**
**Fujimi-shi Saitama (JP)**
Inventor: **Kawasaki, Katsuyoshi**
**9-9-10, Kamirenjaku**
**Mitaka-shi Tokyo (JP)**

(74) Representative: **MacFarlane, John Anthony Christopher et al**
**HASELTINE LAKE & CO. Hazlitt House**
**28, Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to the front suspensions of light two-wheeled vehicles. Hereinafter terms such as right side, left side, front and rear will be used with reference to the intended direction of forward running of the vehicle being referred to.

In a motorcycle equipped with an engine, it is known to provide a front suspension in which the single front wheel is supported on one side only by a single supporting member, disposed either on the right side or on the left side of the front wheel, the use of only a single such member serving to minimise vehicle weight, simplify assembling work and improve accessibility as compared with another commonly used front suspension in which the front wheel is supported by a front fork on both the right and left sides of the wheel. In the known single support front suspension the front wheel supporting member is offset to the right or left with respect to the centre line of the vehicle passing through the front and rear wheels, and it is further known, see French Patent Specification No. 985372, that the front wheel also is offset to one side or the other with respect to the longitudinal centre line of the vehicle. However, by offsetting the front wheel support member the structure of the steering mechanism including the supporting member becomes unbalanced in weight and hence is liable to turn in one direction, since the structure of the steering mechanism is pivotally joined to the body structure including the body frame, and, in order to ensure rectilinear running capability of the motorcycle, the front wheel supporting member is disposed at a caster angle. The combined effect of the caster angle and the turning tendency of the structure of the steering mechanism as just discussed causes a torsional force to act on the body structure. Consequently, the entire vehicle is subject to an inclining action. Accordingly, in a motorcycle employing a single support type front suspension and offset components as just discussed, the dislocation of the centre of gravity of the entire motorcycle from the centre line of the entire motorcycle resulting from the offset centre of gravity of the structure of the steering mechanism is corrected, in running, by an inclination of the entire motorcycle in the balancing direction. That is, the motorcycle is run in an inclined position to maintain dynamic balance. As an alternative, in another motorcycle, the centre of gravity of the body is dislocated intentionally taking the unbalanced weight of the structure of the steering mechanism into consideration.

According to the present invention there is provided a light two-wheeled motor vehicle front suspension in which a single front wheel is supported on one side only by a supporting member the front wheel being offset to one side of the longitudinal centre line of the vehicle (see FR-A-985 372) characterised in that the centre of gravity of a body structure including the rear wheel, a power unit, and a body frame and a seat is offset from the centre line of the vehicle to the side opposite the side to which the front wheel is offset; and the front wheel is supported by the supporting member on the same side as the centre of gravity of the body structure with respect to the centre line of the vehicle. In this suspension unfavourable effects, in a light two-wheeled motor vehicle, of having the front wheel supported with a single supporting member either on the right side or on the left side of the wheel, can be minimised. In particular, the present front suspension enables substantial avoidance of an inclined running position of the vehicle notwithstanding the unbalanced weight resulting from the provision of the single support member, and rectilinear running of the vehicle can be obtained.

For a better understanding of the invention and to show how the same may be carried into effect, reference will now be made, by way of example, to the accompanying drawings, in which:—

Figure 1 is a side view of a two-wheeled motor scooter;

Figure 2 is a front view of the motor scooter of Figure 1, and

Figure 3 is a schematic plan view of the whole scooter.

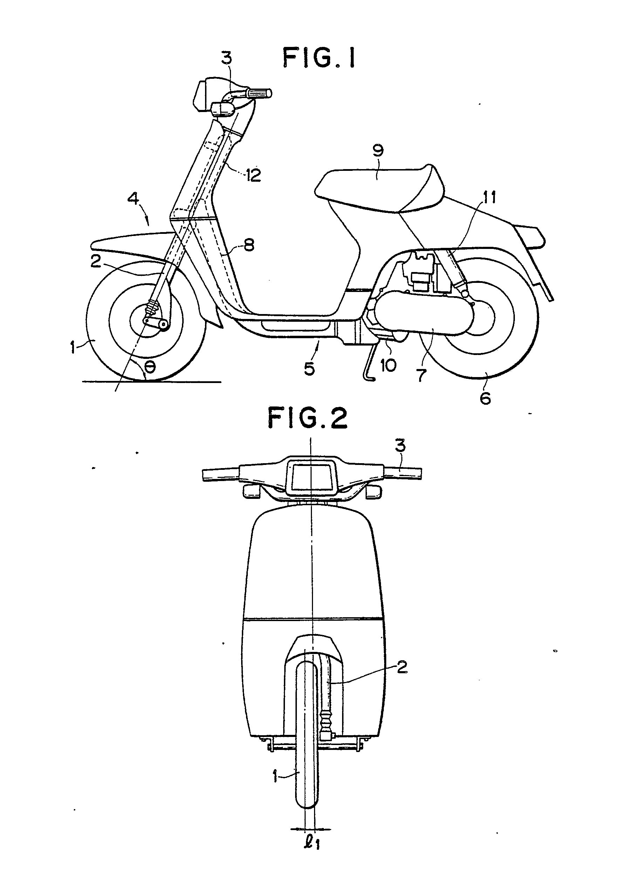

Referring to Figures 1 and 2, a front wheel 1 is pivotally supported at the lower end of a supporting member 2 having a shock absorber mechanism. The supporting member 2 is disposed on one side of the front wheel 1 as illustrated in Figure 2 so that the front wheel 1 is supported by the supporting member 2 acting as a single support. As shown in Figure 1, the supporting member 2 is inclined in a clockwise direction from the vertical to form a caster angle θ with respect to a horizontal line as usual in motorcycles. A handlebar 3 is attached on top of the supporting member 2. The supporting member 2 and the handlebar 3 constitutes a steering structure 4.

A body structure 5 having a rear wheel 6 comprises a power unit 7, a body frame 8 and a seat 9. The rear wheel 6 is pivotally supported at the rear end of the power unit 7 incorporating a transmission case containing a chain and other transmission members for transmitting the engine power to the rear wheel 6. The power unit 7 is joined to and suspended from the body frame 8 by means of a connecting member 10 and a rear shock absorber 11. A head pipe 12 is fixedly provided on the front end of the body frame 8 at an angle the same as the caster angle. The supporting member 2 is inserted rotatably through the head pipe 12 so that the steering structure 4 is pivotally supported by the body structure 5 for steering motion.

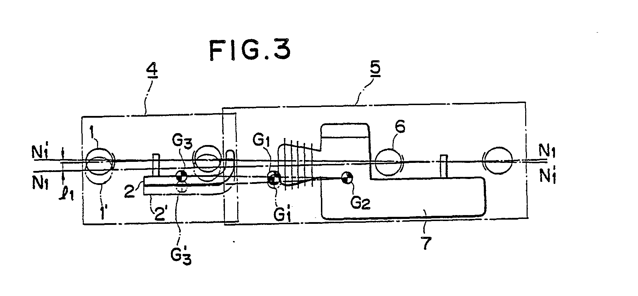

Figure 3 is a schematic plan view of the two-wheeled vehicle as just described illustrating in chain-dot lines a set-up in which line $N_1$—$N_1$ which passes through the central part of the front wheel in position 1' not offset from the centre line of the vehicle and the central part of the rear wheel 6 is the centre line of the vehicle. The line

$N_1$—$N_1$ is aligned with the straight-ahead, that is the rectilinear, running direction of the vehicle. The centre of gravity $G_2$ of the body structure 5 is deviated from the $N_1$—$N_1$ (that is, from the centre line of the vehicle) either to the right or left (to the left as illustrated) with respect to the rectilinear running direction of the vehicle. In this set-up, and with the supporting member at position 2' disposed on the same side of deviation as the centre of gravity $G_2$, the steering structure 4 (which has its centre of gravity $G'_3$ also disposed on this same side) has a tendency to turn in one direction, in a counterclockwise direction with respect to the rectilinear running direction of the vehicle, due to unbalanced weight of the single support mechanism of the steering structure. This turning tendency and the caster angle $\theta$ cause the steering structure 4 to apply a rightward torsional force to the body structure 5 acting to raise the vehicle upright from an inclined position resulting from the deviation from line $N_1$—$N_1$, which is the centre line of the vehicle, of the centre of gravity $G'_1$ of the entire vehicle, that is the centre of gravity of the combination of the body structure 5 and the steering structure 4. Therefore, the vehicle is dynamically balanced on the equilibrium of the moment of the torsional force and the moment of the gravitational force working on the centre of gravity $G'_1$ of the entire vehicle and is able to run truly straight, but in an inclined condition.

The vehicle is better balanced and the inclination of the vehicle in the state of equilibrium of these moments is smaller if the deviation of the centre of gravity of the entire vehicle from the centre line of the vehicle is smaller than illustrated in chain-dot lines in Figure 3. Thus, in accordance with the present invention and as illustrated in full lines in Figure 3, the front wheel 1 together with the supporting member 2 is offset in a direction opposite to the direction of deviation of the centre of gravity $G_2$ of the body structure 5 with respect to the centre line of the vehicle by a distance $I_1$, the centre of gravity $G_1$ of the entire vehicle then being closer to the centre line of the vehicle due to the position of the centre of gravity $G_3$ of the steering structure 4 resulting from the offset disposition of the front wheel 1 and the supporting member 2. Since the centre of gravity $G_1$ (shown in full lines) is now located at a smaller distance from the line $N_1$—$N_1$ (which is the centre line of the vehicle) than was the centre of gravity $G'_1$ (shown in chain-dot lines), the inclination of the vehicle is reduced and the vehicle is able to run in an approximate upright position.

Also illustrated in Figure 3 is the fact that in the offset position just described, the centre line $N'_1$—$N'_1$ of the front wheel 1 and the rear wheel 6 is inclined to the centre line of the vehicle, that is to the line $N_1$—$N_1$.

It is to be noted that it is possible to bring the centre of gravity of the entire vehicle closer to the line $N_1$—$N_1$ (which is the centre line of the vehicle) to reduce the inclination of the vehicle without offsetting the front wheel 1 by changing the position of the centre of gravity of the steering structure from chain-dot line position $G'_3$ to full line position $G_3$ by increasing the weight of the steering structure 4. However, increase in the weight of the steering structure 4 results in increase in the moment of inertia of the steering structure, which is disadvantageous in operating the steering structure. Offsetting the front wheel 1 does not cause this problem, and enables minimisation of the weight of the steering structure.

It is apparent from what has been described hereinbefore that the effect of the unbalanced weight of the steering structure resulting from single support of the single front wheel of a two-wheeled vehicle with a supporting member can be opposed by offsetting the front wheel to one side of the centre line of the vehicle with the centre of gravity of a body structure including the rear wheel of the vehicle offset to the other side of the vehicle centre line so that a tendency of the vehicle to run in an inclined condition is minimised and rectilinear running of the vehicle is secured. In addition, such improvements can be attained without being accompanied by increase in weight of the component members, such as the supporting member, of the steering structure.

**Claim**

1. A light two-wheeled motor vehicle front suspension in which a single front wheel (1) is supported on one side only by a supporting member (2), the front wheel being offset to one side of the longitudinal centre line ($N_1$—$N_1$) of the vehicle; characterised in that the centre of gravity ($G_2$) of a body structure (5) including the rear wheel (6), a power unit (7), a body frame (8) and a seat (9) is offset from the centre line ($N_1$—$N_1$) of the vehicle to the side opposite the side to which the front wheel (1) is offset; and the front wheel (1) is supported by the supporting member (2) on the same side as the centre of gravity ($G_2$) of the body structure with respect to the centre line ($N_1$—$N_1$) of the vehicle.

**Patentanspruch:**

1. Vorderradaufhängung für ein leichtes zweirädriges Motorfahrzeug, in welcher ein einziges Vorderrad (1) lediglich an einer Seite durch einen Stützteil (2) abgestütz ist und das Vorderrad zu einer Seite der Längsmittelebene ($N_1$—$N_1$) hin versetzt ist, dadurch gekennzeichnet, daß der Schwerpunkt ($G_2$) eines das Hinterrad (6), eine Antriebseinheit (7), einen Aufbaurahmen (8) und einen Sitz (9) aufweisenden Aufbaus (5) von der Mittelline ($N_1$—$N_1$) des Fahrzeugs nach der der Seite, nach welcher das Vorderrad (1) hin versetzt ist, entgegengesetzten Seite hin versetzt ist und das Vorderrad (1) vom Stützteil (2) bezogen auf die Mittellinie ($N_1$—$N_1$) des Fahrzeugs an der gleichen Seite abgestützt ist wie der Schwerpunkt ($G_2$) des Aufbaus.

## Revendications

Suspension avant pour véhicule motorisé léger à deux roues, dans laquelle une roue avant unique (1) est supportée d'un seul côté par un élément de support (2), cette roue avant étant décalée d'un côté de l'axe longitudinal ($N_1$—$N_1$) du véhicule, caractérisé par le fait que le centre de gravité ($G_2$) d'une structure de châssis (5), comprenant la roue arrière (6), un moteur (7), un cadre (8) et un siège (9), est décalé de l'axe ($N_1$—$N_1$) du véhicule vers le côté opposé à celui vers lequel la roue avant (1) est décalée; et par le fait que cette roue avant (1) est supportée par l'élément de support (2) du même côté que le centre de gravité ($G_2$) de la structure de châssis par rapport à l'axe ($N_1$—$N_1$) du véhicule.

0 078 639

# FIG.1

# FIG.2

1

# FIG.3